# NEUE EUROPÄISCHE PATENTSCHRIFT

(11) **EP 1 586 475 B2**
(45) Veröffentlichungstag und Bekanntmachung des Hinweises auf die Entscheidung über den Einspruch: **17.04.2013**
(45) Hinweis auf die Patenterteilung: 30.06.2010
(21) Anmeldenummer: 05005623.3
(22) Anmeldetag: 15.03.2005
(51) Int. Cl.: B60J 7/043

(54) **Schiebedachsystem**
Sliding roof arrangement
Dispositif de toit coulissant

(30) Priorität: 16.04.2004 DE 102004018461
(43) Veröffentlichungstag der Anmeldung: 19.10.2005
(73) Patentinhaber: ArvinMeritor GmbH, 63128 Dietzenbach (DE)
(72) Erfinder: Oechel, Holger, 60388 Frankfurt/Main (DE); Grimm, Rainer, 60599 Frankfurt (DE); Böhm, Horst, 60599 Frankfurt/Main (DE); Riess, Claudia, 64405 Lichtenberg (DE); Röhnke, Manfred, 63322 Rödermark (DE)
(74) Vertreter: Prinz & Partner

(56) Entgegenhaltungen:
- EP-A1- 1 236 601
- EP-A1- 1 295 744
- EP-A2- 0 381 066
- DE-A1- 3 802 380
- DE-A1- 19 634 324
- DE-C1- 19 713 347
- DE-U1- 9 302 762
- DE-U1- 20 100 220
- IT-B1- 01 302 207
- KR-B1- 92 008 091
- US-A- 4 923 246
- US-A- 4 995 665

## Beschreibung

Die Erfindung betrifft ein Schiebedachsystem mit mindestens einer Führungsschiene, einem Schlitten, der in der Führungsschiene verstellbar ist, und einem Deckelhalter, an dem ein Deckel angebracht werden kann und der mit dem Schlitten gekoppelt ist, wobei ein erster Hubhebel vorgesehen ist, der an einem Ende mit dem Deckelhalter und am anderen Ende durch zwei Kulissenführungen mit dem Schlitten verbunden ist.

Schiebedachsysteme sind allgemein bekannt. Sie dienen dazu, mindestens einen Deckel (bestehend beispielsweise aus Blech, Kunststoff oder Glas) zwischen einer geschlossenen und einer geöffneten Stellung zu verstellen. In der geschlossenen Stellung wird eine Öffnung in einem Fahrzeugdach verschlossen. In der geöffneten Stellung des Deckels wird diese Öffnung mehr oder weniger freigegeben. Ein Schiebedachsystem der eingangs genannten Art ist aus der DE-U-93 02 762 bekannt.

Allen Schiebedachsystemen, bei denen der Deckel nach außen verstellt wird, so daß er in der geöffneten Stellung auf der Außenseite des Fahrzeugdaches liegt, ist gemeinsam, daß ein möglichst großer Hub des Deckels nach außen bei möglichst geringer Bauhöhe des Schiebedachsystems erzielt werden soll. Bei einer Vielzahl von Systemen wird der Hub des Deckels unmittelbar durch Kulissen erzeugt, die in der Führungsschiene oder am Schlitten angebracht sind. Dadurch ist der Hub notwendigerweise kleiner als die Höhe der Führungsschiene. Wenn ein besonders großer Hub erhalten werden soll, muß auch die Führungsschiene höher ausgeführt werden, was wiederum zu einer geringeren Kopffreiheit im Inneren des Kraftfahrzeugs führt. Auch bekannt sind Konstruktionen, bei denen eine von einer Kulisse vorgegebene Hubbewegung durch Hebel in einen größeren Hub des Deckels übersetzt wird. Diese Systeme sind jedoch vergleichsweise kompliziert.

Aus der KR92-008091ist ein Schiebedachsystem bekannt, bei dem ein erster und ein zweiter Hubhebel verwendet werden, um einen Deckelhalter aus einer Ausgangsposition in eine ausgestellte Position zu verstellen. Einer der Deckelhalter ist mit einem Führungsstift versehen, der in eine fahrzeugfeste Führungskulisse eingreift.

Aus der IT01302207 ist ein Schiebedachsystem bekannt, bei dem ein erster und ein zweiter Hubhebel verwendet werden, um einen Deckelhalter aus einer Ausgangsposition in eine ausgestellte Position zu verstellen. Einer der Deckelhalter ist mit einem Anschlagstift versehen, der mit einer Anschlagschulter zusammenwirken kann, die an einem Führungsprofilteil vorgesehen ist.

Aus der DE 38 02 380 A1 ist ein Schiebedachsystem bekannt, das zwei Deckel aufweist. Der vordere Deckel kann dabei über den hinteren Deckel verschoben werden.

Die Aufgabe der Erfindung besteht darin, ein Schiebedachsystem der eingangs genannten Art zu schaffen, bei dem mit geringem Aufwand ein besonders großer Hub erhalten werden kann.

Zur Lösung dieser Aufgabe ist bei einem Schiebedachsystem der eingangs genannten Art ein zweiter Hubhebel vorgesehen, der an einem Ende mit dem Deckelhalter und am anderen Ende durch zwei Kulissenführungen mit dem Schlitten verbunden ist. Der erste Hubhebel erzeugt die gewünschte große Hubbewegung aufgrund seiner unmittelbaren Kopplung mit dem Schlitten. Auf diese Weise ergibt sich ein einfacher Aufbau, der kostengünstig und mit geringen Toleranzen hergestellt werden kann. Unter dem Begriff "Kulissenführung" wird hierbei der Eingriff eines verschiebbaren Elementes in eine Kulisse verstanden. Der zweite Hubhebel ermöglicht, die Hubbewegung des Deckels vollständig ohne Zwischenhebel oder komplizierte Übersetzungen allein durch die Bewegung des Schlittens zu steuern.

Vorteilhafte Ausgestaltungen der Erfindung ergeben sich aus den Unteransprüchen.

Die Erfindung wird nachfolgend anhand verschiedener Ausführungsformen beschrieben, die in den beigefügten Zeichnungen dargestellt sind. In diesen zeigen:
- Figur 1 eine schematische, perspektivische Ansicht eines Fahrzeugdachs mit einem Schiebedachsystem;
- Figur 2 eine schematische Ansicht einer Führungsschiene mit darin angeordneten Bauteilen eines Schiebedachsystems gemäß einer ersten Ausführungsform der Erfindung, wobei sich der Deckel in der geschlossenen Stellung befindet;
- Figur 3 eine Ansicht entsprechend derjenigen von Figur 2, wobei sich der Deckel in einer Lüfterstellung befindet;
- Figur 4 eine Ansicht entsprechend derjenigen von Figur 2, wobei sich der Deckel in seiner vollständig nach außen ausgestellten Stellung befindet;
- Figur 5 in einer Ansicht entsprechend derjenigen von Figur 2 ein Schiebedachsystem gemäß einer zweiten Ausführungsform der Erfindung;
- Figur 6 in einer Ansicht entsprechend derjenigen von Figur 4 das Schiebedachsystem gemäß der zweiten Ausführungsform;
- Figur 7 in einer Ansicht entsprechend derjenigen von Figur 2 ein Schiebedachsystem gemäß einer dritten Ausführungsform, die nicht zur Erfindung gehört;
- Figur 8 in einer Ansicht entsprechend derjenigen von Figur 4 das Schiebedachsystem gemäß der dritten Ausführungsform;
- Figur 9 in einer Ansicht entsprechend derjenigen von Figur 3 ein Schiebedachsystem gemäß der vierten Ausführungsform;
- Figur 10 das Schiebedachsystem von Figur 9 in einem vollständig geöffneten Zustand;
- Figur 11 eine schematische Seitenansicht eines Schiebedachsystems gemäß einer fünften Ausführungsform, wobei sich der Deckel in einer geschlossenen Stellung befindet;
- Figur 12 eine schematische Seitenansicht des Schiebedachsystems von Figur 11, wobei sich der Deckel in einer Lüfterstellung befindet; und
- Figur 13 eine weitere Seitenansicht des Schiebedachsystems von Figur 11, wobei sich der Deckel in einer nach außen ausgestellten Stellung befindet.

Die Erfindung betrifft ein Schiebedachsystem mit einem ersten und einem zweiten Deckel, von denen der erste über den zweiten verfahren werden kann. Soweit nachfolgend ein Schiebedachsystem mit nur einem Deckel beschrieben wird (Ausführungsformen 1, 2 und 5), dient dies zur Erläuterung des Mechanismus, mit dem der erste Deckel verstellt wird.

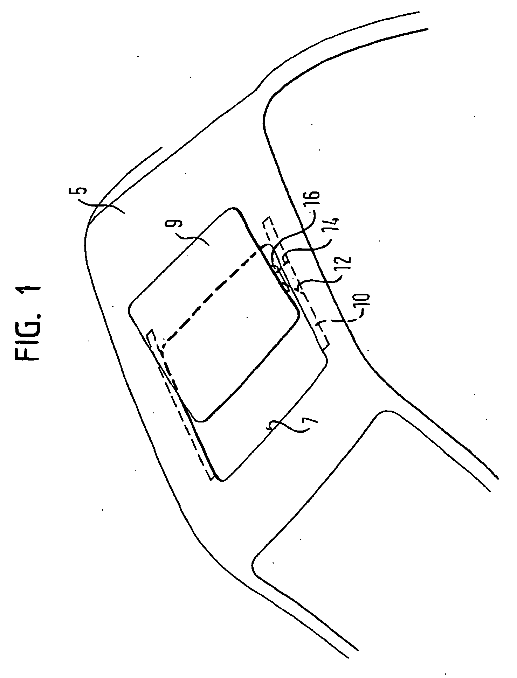

In Figur 1 ist ein Fahrzeugdach 5 zu sehen, das mit einer Öffnung 7 versehen ist. Der Öffnung 7 ist ein Deckel 9 zugeordnet, der zwischen einer geschlossenen Stellung, in welcher er die Öffnung 7 verschließt, und einer geöffneten Stellung bewegbar ist. Dem Deckel 9 ist ein Schiebedachsystem zugeordnet, dessen wesentliche Bestandteile zwei Führungsschienen 10, mehrere Hubhebel 12, 14 sowie zwei Deckelhalter 16 sind. Die Deckelhalter sind hier als separate Bauteile ausgeführt, die fest am Deckel angebracht sind. Sie können aber auch durch Einlegeteile gebildet sein, die in den Deckel beispielsweise eingegossen sind, oder durch einstückig mit dem Deckel ausgebildete Befestigungslaschen etc.

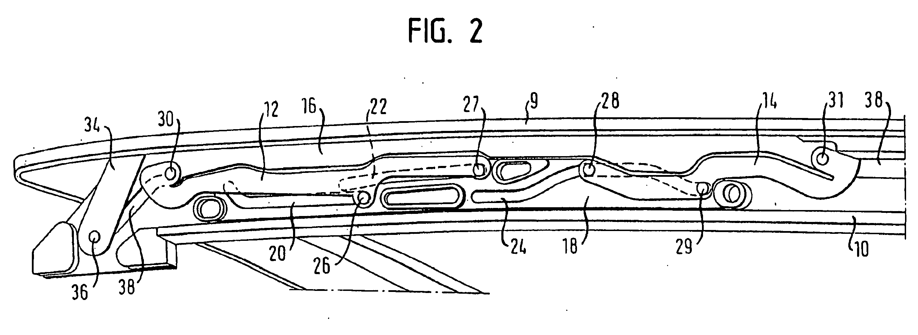

Die beiden Führungsschienen 10 erstrecken sich entlang den Längsrändern der Öffnung 7, also bezogen auf die Fahrtrichtung des Fahrzeugs betrachtet von vorne nach hinten. Üblicherweise sind sie durch ein Profil aus einer Aluminiumlegierung gebildet. In jeder Führungsschiene 10 ist ein Schlitten 18 (siehe Figur 2) verschiebbar angeordnet. Mit dem Schlitten ist ein (nicht dargestelltes) Antriebsmittel gekoppelt, beispielsweise ein schub- und zugfestes Metallkabel, welches von einem (ebenfalls nicht dargestellten) Antriebsmotor angetrieben wird. Der Schlitten besteht üblicherweise aus Kunststoff.

Mit dem Schlitten sind bei der ersten Ausführungsform die beiden Hubhebel gekoppelt, nämlich der vordere oder erste Hubhebel 12 und der hintere oder zweite Hubhebel 14. Zur Kopplung zwischen den Hubhebeln 12, 14 und dem Schlitten 18 werden jeweils Kulissenführungen verwendet. Diese sind gebildet durch drei Hubkulissen im Schlitten 18, in die Stifte eingreifen, die an den Hubhebeln 12, 14 vorgesehen sind. Der Schlitten 18 weist eine erste Hubkulisse 20 auf, die am (bezogen auf die Fahrtrichtung des Fahrzeugs) vorderen Ende des Schlittens 18 angeordnet ist. Von vorne nach hinten betrachtet verläuft die erste Hubkulisse zunächst schräg nach hinten und unten und anschließend im wesentlichen nach hinten, wobei sie weiter geringfügig abfällt. Die zweite Hubkulisse 22 ist etwa mittig am Schlitten 18 angeordnet, wobei der vordere Rand der zweiten Hubkulisse 20 oberhalb und vor dem hinteren Ende der ersten Hubkulisse 20 liegt. Ausgehend vom vorderen Ende verläuft die zweite Hubkulisse 22 etwa geradlinig mit geringer Neigung nach hinten, wobei in der Mitte ein kurzer Übergangsabschnitt vorgesehen ist, in welchem die zweite Hubkulisse 22 waagrecht verläuft. Die dritte Hubkulisse 24 beginnt unterhalb des hinteren Endes der zweiten Schiebeführung, verläuft zunächst waagrecht nach hinten, steigt dann nach oben an, verläuft anschließend wieder waagrecht und schließlich wieder schräg nach unten hinten.

Der erste Hubhebel 12 ist durch zwei Stifte 26, 27 mit der ersten Hubkulisse 20 und der zweiten Hubkulisse 22 verbunden. Der Stift 27 ist am hinteren Ende des ersten Hubhebels 12 angeordnet, und der Stift 26 ist im Abstand vom Stift 27 weiter vorne am ersten Hubhebel angeordnet. Der Abstand zwischen den beiden Stiften 26, 27 ist jedoch kleiner als die Hälfte der Länge des ersten Hubhebels 12. Das dem Stift 27 entgegengesetzte Ende des ersten Hubhebels 12 ist durch einen Bolzen 30 mit einem Deckelhalter 16 verbunden.

Der zweite Hubhebel 14 ist durch zwei Stifte 28, 29 mit der dritten Hubkulisse 24 verbunden. Der Stift 28 ist am vorderen Ende des zweiten Hubhebels angeordnet, und der Stift 29 befindet sich hinter dem vorderen Ende des zweiten Hubhebels. Auch hier ist der Abstand zwischen den beiden Stiften 28, 29 kleiner als die Hälfte der Länge des zweiten Hubhebels 14. An seinem vom Stift 28 entgegengesetzten, hinteren Ende ist der zweite Hubhebel 14 durch einen Bolzen 31 mit dem Deckelhalter 16 verbunden.

Der Deckelhalter 16 dient dazu, den Deckel 9 zu halten, und ist an seinem vorderen Ende mit einer Führungslasche 34 versehen, an deren unteren Ende ein Führungsstift 36 angebracht ist. Der Führungsstift 36 greift in eine Führungskulisse 38. Die Führungskulisse 38 erstreckt sich ausgehend vom vorderen Ende der Führungsschiene 10 zunächst schräg nach oben hinten und anschließend geradlinig entlang der Führungsschiene.

In Figur 2 ist der Schlitten 18 in einer Position gezeigt, die der geschlossenen Stellung des Deckelhalters 16 und des Deckels 9 entspricht. Der Schlitten 18 ist vollständig nach vorne geschoben, so daß sich der Stift 29 am hinteren Ende der zweiten Hubkulisse 24 sowie die Stifte 26, 27 jeweils am hinteren Ende der ersten Hubkulisse 20 bzw. der zweiten Hubkulisse 22 befinden. Der Führungsstift 36 des Deckelhalters befindet sich am vorderen, unteren Ende der Führungskulisse 38. In dieser Position ist der Deckelhalter 16 und damit der Deckel 9 in seiner geschlossenen Stellung verriegelt. Eine Bewegung in vertikaler Richtung ist verhindert durch die beiden Hubhebel 12, 14, die aufgrund ihrer Kopplung mit dem Schlitten 18 keine vertikale Bewegung ausführen können. Eine Bewegung des Deckelhalters 16 in Längsrichtung ist verhindert durch den Führungsstift 36, der in der Führungskulisse 38 gehalten ist.

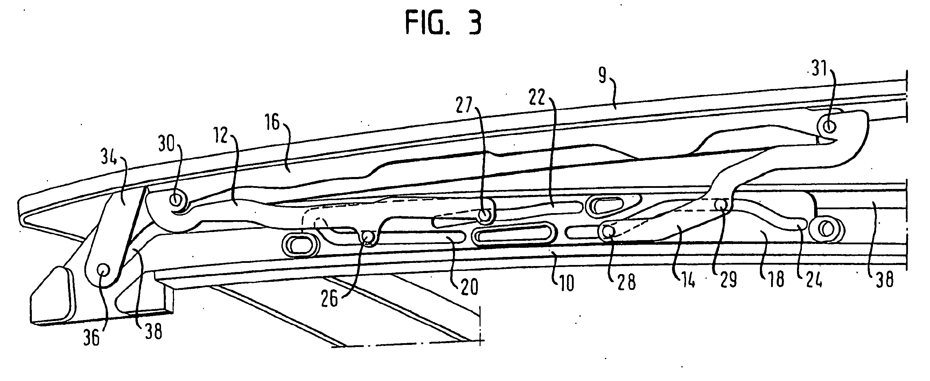

Wenn der Deckel 9 geöffnet wird, wird der Schlitten 18 aus der in Figur 2 gezeigten Position nach hinten in die in Figur 3 gezeigte Position verstellt. Dies bewirkt, daß das hintere Ende des zweiten Hubhebels 14, der mit dem Deckelhalter 16 verbunden ist, nach oben geschwenkt wird, da der Stift 29 in der dritten Hubkulisse 24 nach oben bewegt wird, während der Stift 28 in derselben Hubkulisse nach unten bewegt wird. Der zweite Hubhebel führt also eine Schwenkbewegung um einen Punkt aus, der zwischen den beiden Stiften 28, 29 liegt. Dadurch wird das hintere Ende des Deckelhalters 16 angehoben.

Der erste Hubhebel 12 führt nur eine geringfügige Hubbewegung aus, da der Stift 27 bei der Verstellung des Schlittens 18 geringfügig abgesenkt wird, während gleichzeitig der Stift 26 geringfügig angehoben wird. Der resultierende, geringfügige Hub des vorderen Endes des ersten Hubhebels 12 wird über den Bolzen 30 auf den Deckelhalter 16 übertragen, der im Bereich seines vorderen Endes eine entsprechende Hubbewegung ausführt. Dadurch wird der Führungsstift 36 in der Führungskulisse 38 geringfügig angehoben, wodurch der Deckelhalter 16 ein kleines Stück nach hinten verschoben wird. Die in Figur 3 gezeigte Stellung wird üblicherweise als Lüfterstellung bezeichnet, da hauptsächlich der hintere Rand des Deckels 9 angehoben ist, so daß eine Belüftung des Fahrzeuginnenraums durch den entstehenden Spalt erzielt ist.

Wenn der Deckel 9 weiter geöffnet werden soll, wird der Schlitten 18 weiter nach hinten verschoben. Dabei verbleibt der zweite Hubhebel 14 im wesentlichen in seiner aus Figur 3 bekannten Stellung, während das vordere Ende des ersten Hubhebels 12 weiter angehoben wird. Dies ist insbesondere darauf zurückzuführen, daß der Stift 26 vom vorderen Ende der ersten Hubkulisse 20 deutlich nach oben verschoben wird. Zusätzlich wird der Stift 27 in der zweiten Hubkulisse 22 weiter abgesenkt. Durch diese Hubbewegung am vorderen Ende des Deckelhalters 16 wird der Führungsstift 36 weiter angehoben, bis er in den waagrecht verlaufenden Abschnitt der Führungskulisse 38 eintritt. Der Deckelhalter 16 kann nun zusammen mit dem Deckel 9 vom Schlitten nach hinten verschoben werden, so daß er die Öffnung 7 im Fahrzeugdach 5 vollständig freigibt.

Wenn der Deckel 9 wieder geschlossen werden soll, wird der Schlitten 18 nach vorne verstellt, woraufhin sich der umgekehrte Bewegungsablauf der Hubhebel 12, 14 ergibt, bis der Deckel 9 wieder in seiner geschlossenen Stellung angelangt ist.

Ein besonderer Vorteil des erfindungsgemäßen Schiebedachsystems besteht darin, daß die Hubbewegung mit sehr wenigen Bauteilen erzeugt werden kann. Es werden zwei Hubhebel verwendet, die sowohl mit dem Schlitten als auch mit dem Deckelhalter unmittelbar gekoppelt sind. Es sind keine Zwischenhebel oder Übersetzungshebel erforderlich. Da die Hubkulissen vorteilhaft angeordnet sind, insbesondere da sie sich überlappen, kann der Schlitten 18, betrachtet in der Verschieberichtung, kurz ausgeführt werden. Trotz einer sehr geringen Bauhöhe ergibt sich aufgrund der mit den Hubhebeln erzielten Übersetzung ein vergleichsweise großer Hub des Deckels.

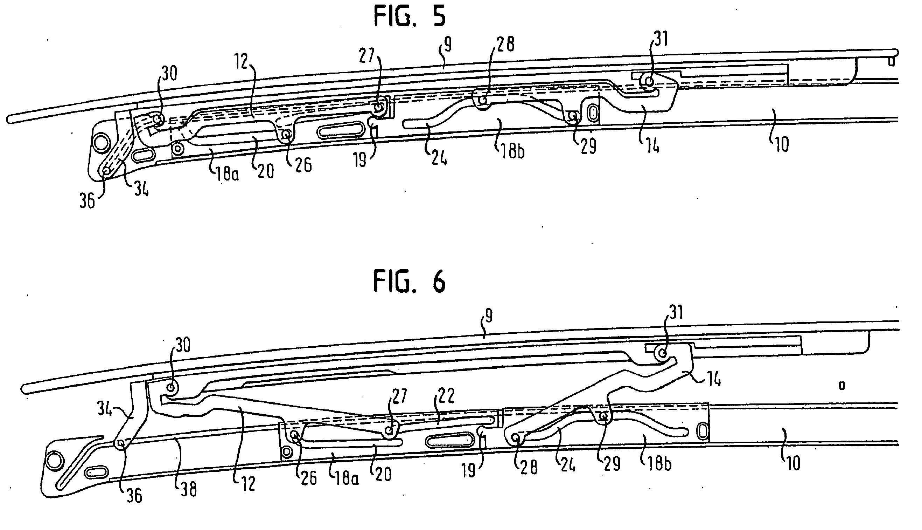

In den Figuren 5 und 6 ist ein Schiebedachsystem gemäß einer zweiten Ausführungsform gezeigt. Für die von der ersten Ausführungsform bekannten Bauteile werden dieselben Bezugszeichen verwendet, und es wird insoweit auf die obigen Erläuterungen verwiesen.

Der Unterschied zur ersten Ausführungsform besteht darin, daß der Schlitten 18 zweiteilig ausgeführt ist und aus einen vorderen Schlittenteil 18a und einem hinteren Schlittenteil 18b besteht. Die beiden Schlittenteile 18a, 18b sind durch eine Gelenk 19 miteinander verbunden, das als Kugelgelenk oder Schwenkgelenk ausgeführt sein kann. Das Gelenk 19 ermöglicht, eine Führungsschiene mit sich ändernder Krümmung zu verwenden, an die sich der Schlitten anpassen kann.

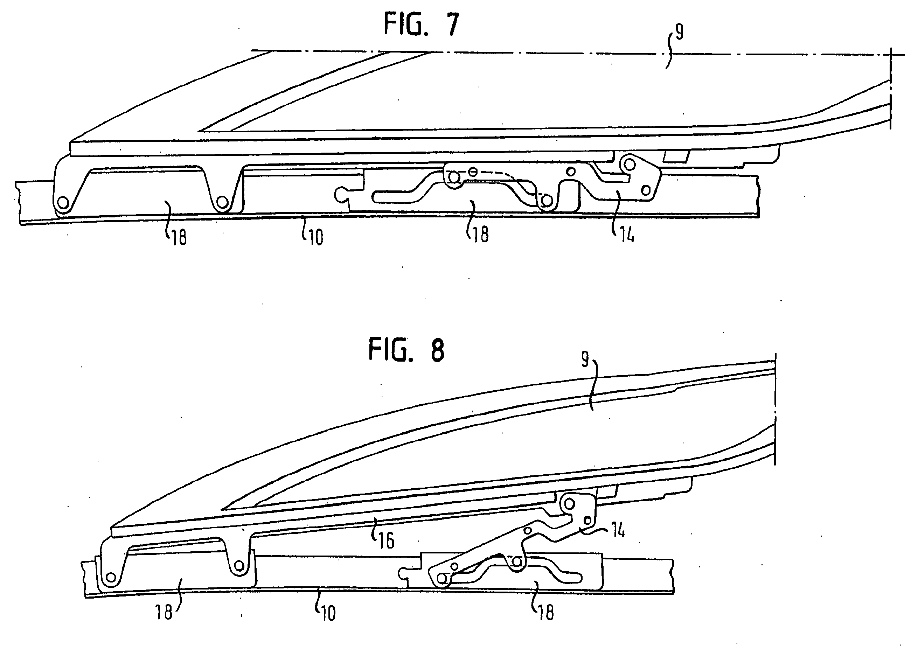

In den Figuren 7 und 8 ist ein Schiebedachsystem gemäß einer nicht zur Erfindung gehörenden Ausführungsform gezeigt. Für die von der ersten Ausführungsform bekannten Bauteile werden dieselben Bezugszeichen verwendet, und es wird insoweit auf die obigen Erläuterungen verwiesen.

Der Unterschied zur ersten Ausführungsform besteht darin, daß der Deckel bei der dritten Ausführungsform lediglich in eine Lüfterstellung (siehe Figur 8) gebracht werden kann und nicht vollständig nach hinten verfahren werden kann. Daher kann auf den ersten, vorderen Hubhebel verzichtet werden; es ist lediglich der zweite, hintere Hubhebel 14 vorgesehen. Dementsprechend ist der Schlitten 18 auch nur mit einer Hubkulisse versehen, nämlich der von der ersten Ausführungsform bekannten hinteren Hubkulisse 24 (wie sie im übrigen auch vom hinteren Schlittenteil 18b der zweiten Ausführungsform bekannt ist).

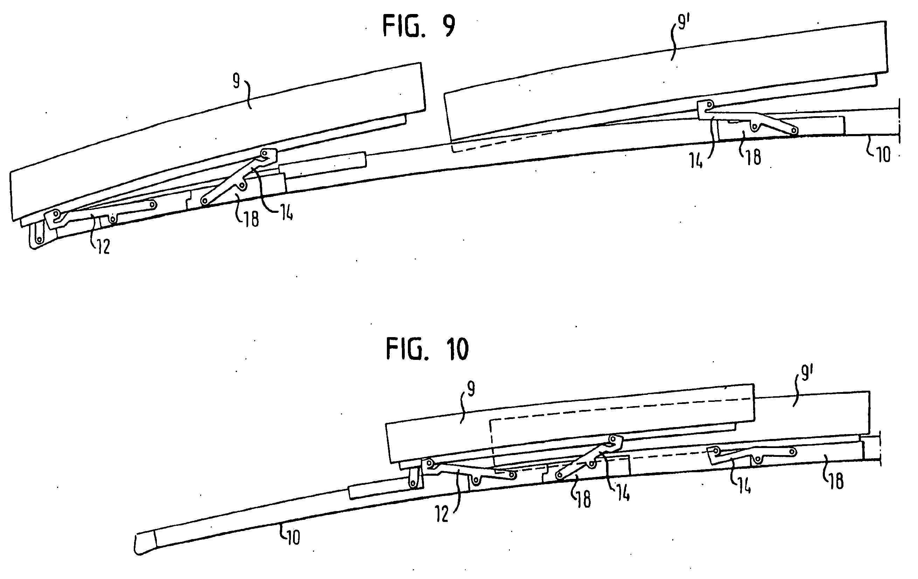

In den Figuren 9 und 10 ist ein Schiebedachsystem gemäß einer werden Ausführungsform gezeigt. Für die von der ersten Ausführungsform bekannten Bauteile werden dieselben Bezugszeichen verwendet, und es wird insoweit auf die obigen Erläuterungen verwiesen.

Das Schiebedachsystem gemäß der vierten Ausführungsform stellt eine Kombination der ersten und der dritten Ausführungsform dar. Es enthält einen Deckel 9, der über eine Lüfterstellung (siehe Figur 9) in eine vollständig geöffnete Stellung (siehe Figur 10) verfahren werden kann. Zusätzlich ist, in Fahrtrichtung gesehen, hinter dem Deckel 9 ein zweiter Deckel 9' vorgesehen, der aus einer vollständig geschlossenen Stellung lediglich in eine Lüfterstellung (siehe Figur 9) gebracht werden kann. Wenn der erste Deckel 9 über die Lüfterstellung hinaus nach außen ausgestellt und dann nach hinten verfahren wird, kehrt der zweite Deckel 9' wieder in seine geschlossene Stellung zurück (siehe Figur 10), so daß der erste Deckel 9 über den zweiten Deckel 9' fahren kann.

Zur Steuerung des ersten und des zweiten Deckels sind (nicht dargestellte) separate Antriebseinrichtungen vorgesehen, die geeignet angesteuert werden können. Es ist auch denkbar, eine einzige Antriebseinrichtung zu verwenden, die geeignet mit den Schlitten für die beiden Deckel 9, 9' gekoppelt ist, so daß der zweite Deckel 9' die gewünschte Bewegung in die Lüfterstellung und wieder zurück in die geschlossene Stellung ausführt, wenn der erste Deckel 9 geöffnet wird.

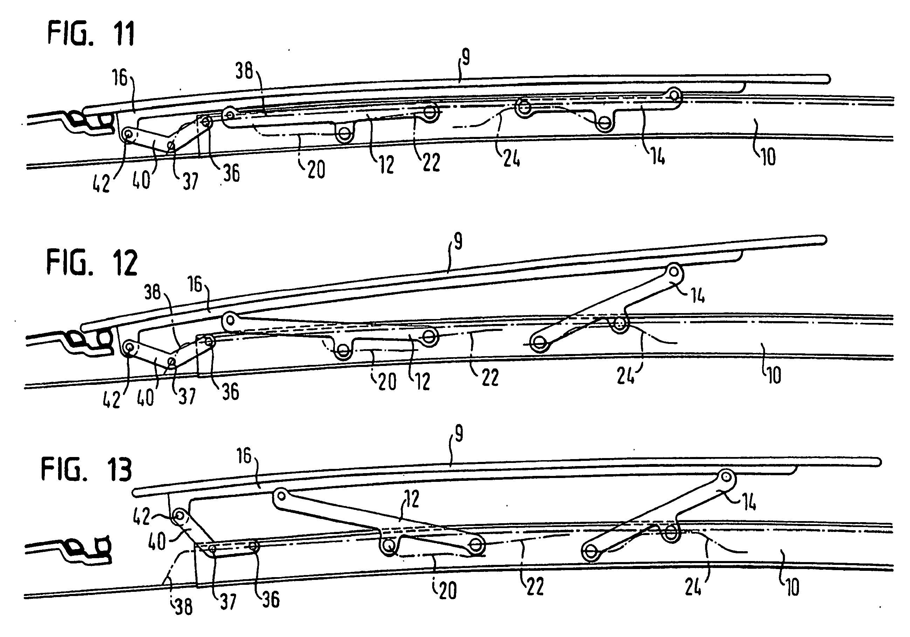

In den Figuren 11 bis 13 ist ein Schiebedachsystem gemäß einer fünften Ausführungsform gezeigt. Die fünfte Ausführungsform entspricht im grundsätzlichen Aufbau der ersten Ausführungsform, so daß nachfolgend im wesentlichen nur die Unterschiede der fünften Ausführungsform gegenüber der ersten Ausführungsform beschrieben werden.

Das Schiebedachsystem gemäß der fünften Ausführungsform unterscheidet sich von demjenigen gemäß der ersten Ausführungsform dadurch, daß anstelle der fest am Deckelhalter 16 angebrachten Führungslasche 34 ein Führungshebel 40 vorgesehen ist. Der Führungshebel 40 ist an einem Ende schwenkbar mittels eines Gelenks 42 mit dem Deckelhalter 16 verbunden. Die vom Gelenk 42 abgewandte Seite des Führungshebels 40 ist mit der Führungskulisse 38 (hier durch ihre Mittelachse symbolisiert) durch zwei Führungsstifte 36, 37 verbunden. Bei der gezeigten Ausführungsform schließen die beiden Abschnitte des Führungshebels 40 einen Winkel von etwa 140° ein. In Abhängigkeit von den konstruktiven Gegebenheiten sind auch andere Werte möglich.

Wenn sich der Deckel 9 in der geschlossenen Stellung befindet (Figur 11), hält der Führungshebel 40 das vordere Ende des Deckelhalters 16 in einer abgesenkten Position fest. In dieser Position des Führungshebels befindet sich der Führungsstift 36, der am vom Deckelhalter 16 abgewandten Ende des Führungshebels angebracht ist, im oberen, annähern waagrecht verlaufenden Abschnitt der Führungskulisse 38. Der etwa mittig am Führungshebel 40 angeordnete Führungsstift 37 befindet sich am unteren, vorderen Ende der Führungskulisse 38.

Wenn sich der Deckel 9 in die Lüfterstellung befindet (Figur 12), wurde er gegenüber der geschlossenen Stellung insgesamt etwas nach hinten (bzw. in den Figuren nach rechts) verstellt. Dadurch hat sich der Führungsstift 37 des Führungshebels 40 in der Führungskulisse etwas nach oben bewegt, während der Führungsstift 36 annähernd auf gleichem Niveau lediglich nach rechts gewandert ist. Dadurch wurde der Führungshebel 40 (zusätzlich zur Translationsbewegung) im Uhrzeigersinn um den Führungsstift 36 verschwenkt, so daß das Gelenk 42 und damit der vordere Rand des Deckels 9 nach oben verstellt wurde. Der Deckel 9 hat sich also von der Dichtung, an der er mit seinem vorderen Rand anliegt, abgehoben.

Wenn sich der Deckel in einer vollständig nach außen ausgestellten Stellung befindet (Figur 13), wurde er über die Lüfterstellung hinaus nach rechts verstellt. Dadurch gelangt auch der Führungsstift 37 in den waagrechten Abschnitt der Führungskulisse 38. Dies hat zur Folge, daß der Führungshebel 40 noch weiter um den Führungsstift 36 verschwenkt wird, so daß der vordere Rand des Deckels maximal nach außen ausgestellt wird.

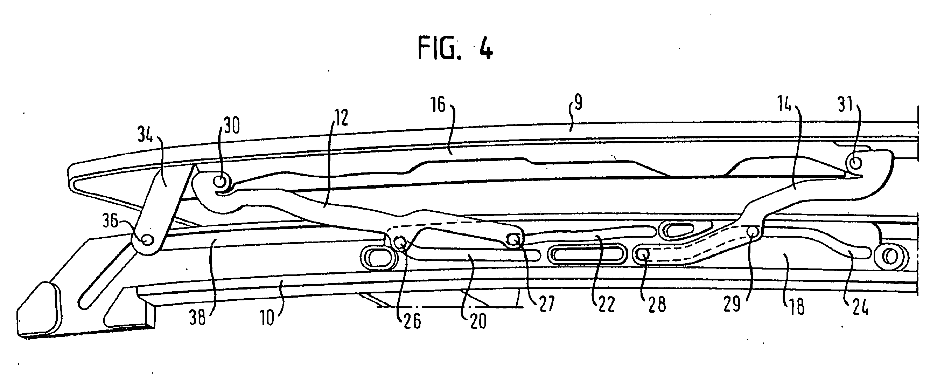

Der besondere Vorteil der fünften Ausführungsform besteht in der kompakten Ausgestaltung. Bei der ersten Ausführungsform ist es erforderlich, die Führungskulisse am vorderen Ende bis unter ein Niveau zu verlängern, das von der eigentlichen Schiene definiert wird. Dieser in den Figuren 2 bis 4 deutlich sichtbare Abschnitt führt zu einer großen Bauhöhe und kann dazu führen, daß die Kopffreiheit im Inneren des Fahrzeug eingeschränkt ist. Bei der fünften Ausführungsform wirkt der Führungshebel 40 als Übersetzung. Die Führungskulisse 38 hat eine vergleichsweise geringe Höhe, da sie vollständig innerhalb des Profils der Führungsschiene 10 untergebracht ist; ein nach unten vorstehender Abschnitt ist nicht nötig. Die geringere Höhe der Führungskulisse 38 wird vom Führungshebel 40 in einen größeren Hub des vorderen Abschnittes des Deckels 9 übersetzt.

### Bezugszeichenliste

- 5:: Fahrzeugdach
- 7:: Öffnung
- 9:: Deckel
- 9':: zweiter Deckel
- 10:: Führungsschiene
- 12:: Hubhebel
- 14:: Hubhebel
- 16:: Deckelhalter
- 18:: Schlitten
- 18a:: vorderer Schlittenteil
- 18b:: hinterer Schlittenteil
- 20:: erste Hubkulisse
- 22:: zweite Hubkulisse
- 24:: dritte Hubkulisse
- 26:: Stift
- 27:: Stift
- 28:: Stift
- 29:: Stift
- 30:: Bolzen
- 31:: Bolzen
- 34:: Führungslasche
- 36:: Führungsstift
- 38:: Führungskulisse
- 40:: Führungshebel
- 42:: Gelenk

## Patentansprüche

1. Schiebedachsystem mit mindestens einer Führungsschiene (10), einem Schlitten (18), der in der Führungsschiene verstellbar ist, und einem Deckelhalter (16), an dem ein erster Deckel (9) angebracht werden kann und der mit dem Schlitten (18) gekoppelt ist, wobei ein erster Hubhebel (12) vorgesehen ist, der an einem Ende mit dem Deckelhalter (16) und am anderen Ende durch zwei Kulissenführungen (20, 22, 26, 27) mit dem Schlitten (18) verbunden ist, wobei ein zweiter Hubhebel (14) vorgesehen ist, der an einem Ende mit dem Deckelhalter (16) und am anderen Ende durch zwei Kulissenführungen (24, 28, 29) mit dem Schlitten (18) verbunden ist, wobei der Deckelhalter (16) in eine Führungskulisse (38) eingreift, die in der Führungsschiene (10) ausgebildet ist, und wobei ein zweiter Deckel (9') vorgesehen ist und der erste Deckel (9) über den zweiten Deckel (9') verfahren werden kann, wobei der erste Deckel in eine Lüfterstellung und eine über die Lüfterstellung hinaus nach außen verstellte Stellung gebracht werden kann, in der er über den zweiten Deckel verfahren werden kann, wobei der Deckerhalter in der Lüfterstellung ein kleines Stück nach hinten verschoben wurde.

2. Schiebedachsystem nach Anspruch 1, **dadurch gekennzeichnet, daß** der Deckelhalter (16) direkt in die Führungskulisse (38) eingreift.

3. Schiebedachsystem nach Anspruch 1, **dadurch gekennzeichnet, daß** der Deckelhalter (16) mittels eines Führungshebels mit der Führungskulisse (38) gekoppelt ist.

4. Schiebedachsystem nach Anspruch 3, **dadurch gekennzeichnet, daß** der Führungshebel (40) den Hub der Führungskulisse (38) in einen größeren Hub des Deckelhalters (16) übersetzt.

5. Schiebedachsystem nach einem der vorhergehenden Ansprüche, **dadurch gekennzeichnet, daß** der Abstand zwischen den beiden Punkten (26, 27, 28, 29), an denen der Hubhebel (12, 14) mit dem Schlitten (18) gekoppelt ist, weniger als die Hälfte der gesamten Länge des Hubhebels (12, 14) beträgt.

6. Schiebedachsystem nach einem der vorhergehenden Ansprüche, **dadurch gekennzeichnet, daß** die Kulissenführungen gebildet sind durch eine Hubkulisse (20; 22; 24) im Schlitten (18) und einen Stift (26, 27, 28, 29) im Hubhebel (12, 14), der in die Hubkulisse eingreift.

7. Schiebedachsystem nach Anspruch 6, **dadurch gekennzeichnet, daß** der erste Hubhebel (12) in zwei Hubkulissen (20, 22) eingreift.

8. Schiebedachsystem nach Anspruch 6, **dadurch gekennzeichnet, daß** der zweite Hubhebel (14) in ein und dieselbe Hubkulisse (24) eingreift.

9. Schiebedachsystem nach einem der vorhergehenden Ansprüche, **dadurch gekennzeichnet, daß** der Schlitten (18) aus einem vorderen Schlittenteil (18a) und einem hinteren Schlittenteil (18b) besteht, die gelenkig miteinander verbunden sind.

## Claims

1. Sliding roof system with at least one guide rail (10), a carriage (18) which is displaceable in the guide rail, and a cover holder (16) to which a first cover (9) can be attached and which is coupled to the carriage (18), wherein a first lifting lever (12) is provided, said lifting lever being connected at one end to the cover holder (16) and at the other end to the carriage (18) by means of two slotted guides (20, 22, 26, 27), wherein a second lifting lever (14) is provided, said lifting lever being connected at one end to the cover holder (16) and at the other end to the carriage (18) by means of two slotted guides (24, 28, 29), the cover holder (16) engaging in a guide slot (38) which is formed in the guide rail (10), and a second cover (9') being provided and the first cover (9) being adapted to be moved over the second cover (9'), the first cover being adapted to be brought to a ventilation position and a position adjusted outwards beyond the ventilation position in which it can be moved over the second cover, the cover holder having been shifted to the rear by a small amount in the ventilation position.

2. Sliding roof system according to Claim 1, **characterized in that** the cover holder (16) engages directly in the guide slot (38).

3. Sliding roof system according to Claim 1, **characterized in that** the cover holder (16) is coupled to the guide slot (38) by means of a guide lever.

4. Sliding roof system according to Claim 3, **characterized in that** the guide lever (40) converts the lift of the guide slot (38) into a greater lift of the cover holder(16).

5. Sliding roof system according to one of the preceding claims, **characterized in that** the distance between the two points (26, 27, 28, 29) at which the lifting lever (12, 14) is coupled to the carriage (18) is less than half of the entire length of the lifting lever (12, 14).

6. Sliding roof system according to one of the preceding claims, **characterized in that** the slotted guides are formed by a lifting slot (20; 22; 24) in the carriage (18) and a pin (26, 27, 28, 29) in the lifting lever (12, 14), said pin engaging in the lifting slot.

7. Sliding roof system according to Claim 6, **characterized in that** the first lifting lever (12) engages in two lifting slots (20, 22).

8. Sliding roof system according to Claim 6, **characterized in that** the second lifting lever (14) engages in one and the same lifting slot (24).

9. Sliding roof system according to one of the preceding claims, **characterized in that** the carriage (18) consists of a front carriage part (18a) and a rear carriage part (18b) which are connected to each other in an articulated manner.

## Revendications

1. Système de toit coulissant comprenant au moins un rail de guidage (10), un chariot (18), qui peut être réglé dans le rail de guidage, et un dispositif de retenue de couvercle (16) sur lequel peut être monté un premier couvercle (9) et qui est accouplé au chariot (18), un premier levier de levage (12) étant prévu, lequel est connecté à une extrémité au dispositif de retenue de couvercle (16) et à l'autre extrémité par deux glissières (20, 22, 26, 27) au chariot (18), un deuxième levier de levage (14) étant prévu, lequel est connecté à une extrémité au dispositif de retenue de couvercle (16) et à l'autre extrémité par deux glissières (24, 28, 29) au chariot (18), le dispositif de retenue de couvercle (16) venant en prise dans une coulisse de guidage (38) qui est réalisée dans le rail de guidage (10), et un deuxième couvercle (9') étant prévu et le premier couvercle (9) pouvant être déplacé par rapport au deuxième couvercle (9'), le premier couvercle pouvant être amené dans une position de ventilation et dans une position décalée vers l'extérieur au-delà de la position de ventilation, dans laquelle il peut être déplacé par rapport au deuxième couvercle, le dispositif de retenue de couvercle, dans la position de ventilation, ayant été glissé un petit peu vers l'arrière.

2. Système de toit coulissant selon la revendication 1, **caractérisé en ce que** le dispositif de retenue de couvercle (16) vient en prise directement dans la coulisse de guidage (38).

3. Système de toit coulissant selon la revendication 1, **caractérisé en ce que** le dispositif de retenue de couvercle (16) est accouplé au moyen d'un levier de guidage à la coulisse de guidage (38).

4. Système de toit coulissant selon la revendication 3, **caractérisé en ce que** le levier de guidage (40) multiplie la course de la coulisse de guidage (38) en une plus grande course du dispositif de retenue de couvercle (16).

5. Système de toit coulissant selon l'une quelconque des revendications précédentes, **caractérisé en ce que** la distance entre les deux points (26, 27, 28, 29) auxquels le levier de levage (12, 14) est accouplé au chariot (18) est inférieure à la moitié de la longueur totale du levier de levage (12, 14).

6. Système de toit coulissant selon l'une quelconque des revendications précédentes, **caractérisé en ce que** les glissières sont formées par une coulisse de levage (20 ; 22 ; 24) dans le chariot (18) et par une goupille (26, 27, 28, 29) dans le levier de levage (12, 14) qui vient en prise dans la coulisse de levage.

7. Système de toit coulissant selon la revendication 6, **caractérisé en ce que** le premier levier de levage (12) vient en prise dans deux coulisses de levage (20, 22).

8. Système de toit coulissant selon la revendication 6, **caractérisé en ce que** le deuxième levier de levage (14) vient en prise dans la même et unique coulisse de levage (24).

9. Système de toit coulissant selon l'une quelconque des revendications précédentes, **caractérisé en ce que** le chariot (18) se compose d'une partie de chariot avant (18a) et d'une partie de chariot arrière (18b) qui sont connectées de manière articulée l'une à l'autre.
